Europäisches Patentamt

European Patent Office

Office européen des brevets

(19)

(11) **EP 1 447 751 A1**

(12) **EUROPEAN PATENT APPLICATION**
published in accordance with Art. 158(3) EPC

(43) Date of publication:
**18.08.2004 Bulletin 2004/34**

(51) Int Cl.7: **G06F 15/00**, G06F 1/00,
G06T 1/00

(21) Application number: **02803558.2**

(22) Date of filing: **21.11.2002**

(86) International application number:
**PCT/JP2002/012193**

(87) International publication number:
**WO 2003/044679 (30.05.2003 Gazette 2003/22)**

(84) Designated Contracting States:
**AT BE BG CH CY CZ DE DK EE ES FI FR GB GR
IE IT LI LU MC NL PT SE SK TR**

(30) Priority: **22.11.2001 JP 2001358041**

(71) Applicant: **Sony Corporation
Tokyo 141-0001 (JP)**

(72) Inventor: **ISOZAKI, Masaaki
c/o SONY CORPORATION
Shinagawa-ku, Tokyo 141-0001 (JP)**

(74) Representative: **Leppard, Andrew John
D Young & Co,
21 New Fetter Lane
London EC4A 1DA (GB)**

(54) **NETWORK INFORMATION PROCESSING SYSTEM&comma; INFORMATION PROVIDING MANAGEMENT APPARATUS&comma; INFORMATION PROCESSING APPARATUS&comma; AND INFORMATION PROCESSING METHOD**

(57)    As shown in FIG. 4, a remote electronic conference system (102) related to the present invention comprises: a notebook personal computer PCi (i=1-4) having a GUI function and processing arbitrary information; a presentation apparatus (10A) for processing at least the information transferred from the personal computer (PCi) and providing electronic information contents including display information; and a wireless LAN for connecting this apparatus (10A) and each of the personal computers (PC1-PC4), in which at the presentation apparatus (10A) or the notebook personal computer (PCi), a GUI function of this personal computer (PCi) is utilized to perform authentication processing for the purpose of identifying an original user. With this, it is possible to refuse an unauthorized user from entering this system (102). In addition, it is possible to prevent a third party for performing unauthorized use of network-constituent devices including this presentation apparatus (10A).

F I G. 4

EP 1 447 751 A1

**Description**

## TECHNICAL FIELD

The present invention relates to a network-information-processing system, an information provision management apparatus, an information-processing apparatus, and an information-processing method that are well applicable to a network conference system, a network education system, a network game system, etc.

More particularly, at least one information-processing apparatus for processing arbitrary information and information provision management means for providing electronic information contents including display information are connected to each other by communication means, so that the information provision management means or the information-processing apparatus performs authentication processing for identifying an original user utilizing an input operation function of this information-processing apparatus, thereby enabling refusing an unauthorized user from attending the system and preventing unauthorized use by a third party of network-constituent electronic devices including this information provision management means.

## BACKGROUND ART

Recently, a so-called electronic conference system has been often employed by which a presenter (person who makes a presentation of materials) brings into a conference room a presentation material created using a personal computer and presents the material to a plurality of other conference attendees using an electronic device.

In this electronic conference system, a display device and a notebook personal computer of the material presenter are connected to each other. As this display device, a data projector is used so that presentation materials created with a personal computer may be displayed on it. To the data projector (hereinafter referred to as "projector"), a notebook personal computer of one presenter is connected through an RGB-color signal cable, so that a screen being displayed on this notebook personal computer is projected to a white wall etc. The presentation material projected on the white wall etc. is pointed by a mouse cursor operated by the presenter. That is, only the materials owned by a briefer are displayed on the white wall etc.

Recently, such a data projector as to accommodate networks is available. This projector has built-in personal computer functions. By using such the projector, the briefer transfers a presentation file from his notebook personal computer (hereinafter referred to as "information-processing apparatus" also) via a network to the projector so that contents of the file may be displayed and projected utilizing the personal computer functions of this projector.

However, a conventional electronic conference system has the following problems.

① To prevent unauthorized use of a network-constituent electronic device by a third party, such a method is conceivable as to display a user icon such as a facial portrait of an attendee on a screen of an information-processing apparatus of the side of a client in this electronic conference system, thereby deciding whether his entry into this system should be permitted or refused. In this case, if creation and registration of the user icon is entrusted to the side of the attendee, a third party may use a user icon of another person in an unauthorized manner to attend this electronic conference. In particular, if attendees are on loan to branch offices from a central office or present in different conference sites, they cannot confirm their faces each other in many cases. In such a case, it may be feared that a third party would pass himself off as the original person and attend the conference to steal valuable presentation information.

② In this electronic conference system, if such an approach is introduced that one specifies a partner by clicking on his user icon to chat about with him or transfer a file to him, he may mistakenly transfer a chat or file to a person who passes himself off as an authorized attendee. Therefore, a possibility becomes high that valuable presentation information may be leaked, thus providing a significant problem in security. Especially, in a case where an unspecified number of users use a notebook personal computer as the information-processing apparatus, management of their user icons becomes more and more important.

## DISCLOSURE OF THE INVENTION

A network-information-processing system related to the present invention in which a plurality of network-constituent electronic devices is connected to a network comprises at least one information-processing apparatus having an input operation function to process arbitrary information, and information provision management means for processing information transferred from the information-processing apparatus. This information provision management means registers beforehand image information and individual information concerning a user as related to each other and delivers key information to the information-processing apparatus of the user, the key information indicating that the information has been registered, and this information provision management means, when receiving the key information from the information-processing apparatus and presenting with this key information, reads the individual information from the image information of the user based on the key information and checks this read individual information with presented individual information to authenticate the user.

According to this network-information-processing system, at least one information-processing apparatus and information provision management means are connected to each other by communication means such as a wireless LAN in a case where a plurality of network-constituent electronic devices is connected to the same network. This information provision management means processes the information transferred from the information-processing apparatus and provides electronic information contents including display information. Based on this, in a case of entering the present system or the like, the information provision management means or any information-processing apparatus utilizes an input operation function of this information-processing apparatus to perform authentication, thereby identifying whether he is the original user.

For example, when the information provision management means authenticates an original user, the information-processing apparatus requests the information provision management means to register face image information and individual information of the user beforehand. The information provision management means manages the user's face image information, the registration of which has been requested by the information-processing apparatus, with the face image information adding the individual information and delivers to the user's information-processing apparatus key information indicating that the information has been registered.

Subsequently, when the information provision management means is presented with the key information utilizing the input operation function of the information-processing apparatus, the information provision management means reads the individual information from the face image information based on the key information and compares and checks this read individual information with presented individual information to authenticate the original person. Therefore, if the individual information read from the face image information agrees with the individual information presented by the user, he is permitted to enter the present system. If the individual information read from the face image information does not agree with the individual information presented by a third party, the present system can refuse him from entering it. In such a manner, at the information provision management means or any information-processing apparatus, it is possible to prevent a third party from using in an unauthorized manner network-constituent electronic devices including this information provision management means.

An information provision management apparatus related to the present invention for processing information transferred from an information-processing apparatus of a user and providing electronic information contents including display information comprises storage means for storing face image information and individual information of a user, the face image information and individual information being registered from this information-processing apparatus, and a control apparatus for managing the user's face image information, the registration of which has been requested by the information-processing apparatus, with the face image information adding individual information, or creating the user's face image information and delivering to this user's information-processing apparatus the user's face image information and/or key information indicating that the information has been registered, wherein, when the information-processing apparatus presents the key information to the control apparatus, the individual information is read from the face image information based on the key information and compares and checks the read individual information with presented individual information to authenticate an original person.

According to this information provision management apparatus, at least in the case of processing information transferred from the informtion-processing apparatus of a user and providing electronic information contents including display information, the storage means stores user's face image information, the registration of which has been requested by the information-processing apparatus, and individual information. The control apparatus manages the user's face image information with it adding individual information and delivers to this user's information-processing apparatus the key information indicating that the information has been registered. Based on this, when the key information is presented from the information-processing apparatus to the control apparatus, this control apparatus authenticates an original person by comparing and checking the individual information read out of the face image information based on the key information with presented individual information. This allows the original user to be authenticated at the information provision management apparatus. It is thus possible to apply this information provision management apparatus sufficiently to an information-processing system in which a plurality of network-constituent electronic devices is connected to the same network.

An information processing apparatus related to the present invention for processing arbitrary information based on key information to authenticate an original user comprises input means for inputting the key information, storage means for storing user's face image information obtained beforehand and key information indicating that the information has been registered, and a control apparatus for reading the user's face image information from the storage means based on the key information input from the input means and reading individual information from the user's face image information and comparing and checking the individual information read from the user's face image information with individual information input by the input means to authenticate the original user.

According to this information-processing apparatus, in the case of processing arbitrary information based on key information to authenticate an original user, the input means is used to input the key information. The user's face image information obtained beforehand and the key information indicating that the information has been registered are stored in the storage means. Based on this, the control apparatus reads individual information from the user's face image information based on the key information and compares and checks this individual information read from the user's face image information with individual information input by the input means. Therefore, this allows an original user to be authenticated at this information-processing apparatus. It is thus possible to apply this information-processing apparatus sufficiently to an information processing system in which a plurality of network-constituent electronic devices is connected to the same network.

An information-processing method related to the present invention for processing information by connecting a plurality of network-constituent electronic devices to a network comprises the steps of preparing beforehand at least one information-processing terrane having an input operation function to process arbitrary information and an information provision management terrane for processing information transferred from the information- processing terrane, registering beforehand in this information provision management terrane user's image information and individual information in a condition where they are related to each other and delivering to the user's information-processing terrane key information indicating that the information has been registered, and, when the key information is received from the user's information-processing terrane and presented, reading the individual information from the image information based on the key information and checking this read individual information with presented individual information to authenticate the user.

According to this information processing method, if the individual information read from the user's image information agrees with the individual information presented by the user, it is possible to permit the user to enter the present system. If the individual information read from the image information does not agree with individual information presented by a third party, it is possible to refuse him from entering the present system. This prevents a third party from performing unauthorized use of network-constituent electronic devices including this information provision management terrane.

## BRIEF DESCRIPTION OF THE DRAWINGS

FIG. 1 is a block diagram for showing a configuration of a network-information-processing system 100 according to a first embodiment related to the present invention;
FIG. 2 is a flowchart for showing an authentication example in an information provision management terrane I;
FIG. 3A is a flowchart for showing an information delivery example in the information provision management terrane I;
FIG. 3B is a flowchart for showing an authentication example in an information-processing terrane II;
FIG. 4 is an image view for showing a configuration of a remote electronic conference system 102 according to a second embodiment related to the present invention;
FIG. 5 is a block diagram for showing an internal configuration of a communicator 3A etc.;
FIG. 6 is an image view for showing a data format example of user confirmation data UCD;
FIG. 7 is an image view for showing an example of superimposition (embedding) into a face image file Q ;
FIG. 8 is a flowchart for showing a creation example of a user icon image;
FIG. 9 is an image view for showing a display example of a GUI-activation-time screen P0 at a notebook personal computer PCi;
FIG. 10 is an image view for showing a display example of a user icon image on an attendee screen P2;
FIG. 11 is an image view for showing a display example of a file confirmation screen P11 on a control screen P1;
FIG. 12 is an image view for showing a display example of a setup screen P12 on the control screen P1;
FIG. 13 is an image view for showing a display example of a limited user icon image on the attendee screen P2;
FIG. 14A is a flowchart for showing a processing example (No. 1) at a notebook personal computer when a conference of a remote electronic conference system 102 is attended; and
FIG. 14B is a flowchart for showing a processing example (No. 2) at a relevant notebook personal computer.

## BEST MODE FOR CARRYING OUT THE INVENTION

The present invention has solved the conventional problems and, it is an object of the present invention to provide a network-information-processing system, an information provision management apparatus, an information-processing apparatus, and an information-processing method that enable refusing an unauthorized user from entering a relevant system and preventing unauthorized use of a third party of network-constituent electronic devices including a relevant information provision management terrane.

The following will describe an embodiment of each of the network-information-processing system, the information provision management apparatus, the information-processing apparatus, and the information-processing method related to the present invention with reference to drawings.

[First Embodiment]

The present embodiment is a highest conception of a network information processing system, in which at least one information-processing apparatus for processing arbitrary information and information provision management means for providing electronic information contents including display information are connected to each other by communication means. At this information provision management means or information-processing system, an input operation function of this information-processing apparatus is utilized to perform authentication processing for the purpose of identifying an original user. In this processing, if individual information read from image information concerning a user does not agree with individual information presented by the user, it is possible to refuse him from entering this system and prevent unauthorized use of a third party of network-constituent electronic devices including this information provision management means.

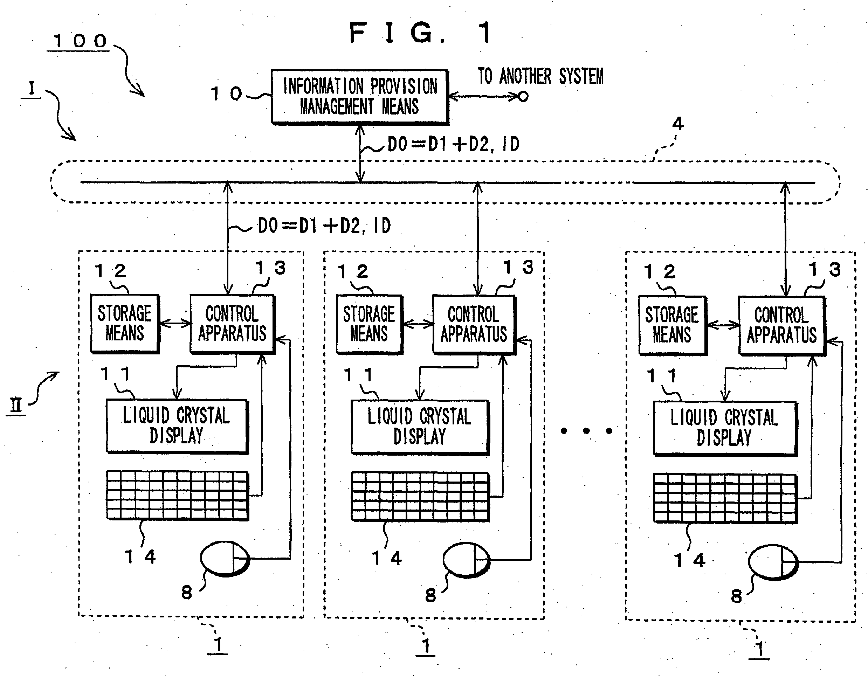

A network-information-processing system 100 according to the first embodiment shown in FIG. 1 is a information-processing system in which a plurality of network-constituent electronic devices is connected to the same network, which is well applicable to network conference system, a network education system, a network game system, etc. In this system 100, information provision management means 10 (information provision management terrane I) is arranged in a specific region or a specific place such as a conference room, and at least one information-processing apparatus 1 (information-processing terrane II) is prepared in this specific region or place. As this information-processing apparatus 1, a notebook personal computer, which is easy to carry about, is used. Of course, not only a notebook personal computer but also a desktop type personal computer may be used.

As the information provision management means 10, for example, a projector for projecting a presentation material onto a white wall etc. to display it, a communicator having computer functions, a creator for creating a conference proceedings etc. are used. This information provision management means 10 and each of the information-processing apparatuses are connected to each other by communication means 4 of a wireless LAN communication type etc. so that the information provision management means 10 may be remote-controlled on the basis of operation instructions obtained from any information processing apparatus. The information provision management means 10 may be used in a condition where it is connected to any other network-information-processing system. A remote conference system etc. can be built.

This system 100 is configured so that at the information provision management means 10 or the information-processing apparatus 1, an input operation function of this information-processing apparatus 1 is utilized to perform authentication processing for the purpose of identifying an original user. For example, at the information provision management means 10, user's face image information D0, which is one example of image information concerning the user, is created. The user's face image information D0 includes user's face image information D1, the registration of which has been requested, and individual information D2 added thereto. The individual information D2 includes a user's name, an employee number, a mail address, a telephone number. The information concerning the user includes a facial portrait as well as a user's likeness, a symbol or shape representing the user, and other attributes of the user.

In this system 100, the user's face image information D0 is created by a specific manager and registered in the information provision management means 10 etc. and issued to the information-processing apparatus 1 of the user. Before this issuance, the information provision management means 10 superimposes the individual information D2 for identifying an original person into a user's face image, so that when the system is used, the individual information D2 superimposed into the face image is read to authenticate the original user. In such a manner, it is possible to prevent a third party from using the user's face image information D0 in an unauthorized manner.

The information-processing apparatus 1 processes arbitrary information based on key information ID. The key information ID refers to information for identifying an original user. As the key information ID, for example, a password, fingerprint information, and the like for authenticating an original user are used. A password is composed of a combination of alphabets, figures, symbols, etc. However, when this fingerprint information is used as the key information ID, it is necessary to incorporate a fingerprint-detecting function into an input tool.

The information-processing apparatus 1 is equipped with a keyboard 14 and a mouse 8, which are each one example of input means. The keyboard 14 is used when the key information ID, group identification information, etc. are input. To deactivate this system 100, press an exit key etc. The mouse 8 is used when a pointer is operated, for example, to transfer a file. To the keyboard 14 and the mouse 8, a control apparatus 13 is connected.

To this control apparatus 13, storage means 12 is connected to store the user's face image information D0 obtained beforehand and the key information ID indicating that the information has been registered. The control apparatus 13 reads user's face image information D0 from the storage means 12 based on the key information ID entered from the keyboard 24, reads the individual information D2 from the user's face image information D0, and compares and checks the individual information D2 read from the user's face image information D0 with individual information D2 entered from the keyboard 14 to authenticate an original user.

To this control apparatus 13, a liquid crystal display (LCD) 11, which is one example of the display means, is connected to display a face image of a user. The LCD11 has a graphic user interface (hereinafter referred to as GUI function), which is one example of the input operation function, to process arbitrary information utilizing this GUI function and a mouse operation function.

On the LCD11, individual information D2 added to a user's face image is displayed. To provide this display, the GUI function is utilized. An input operation by use of the GUI function here refers to an operation such as clicking of a right button of the mouse 8. In such a manner, it is possible for any other attendee to confirm individual information D2 on an owner of relevant user's face image easily. In this system 100, if a user is yet to be authenticated, indication to the effect that this user is yet to be authenticated is given on the LCD11.

As the information-processing apparatus 1, an easy-to-carry-about notebook personal computer is used. Of course, not only a notebook personal computer but also a desktop personal computer may be used. To enter an electronic conference system etc., a dedicated application (client GUI program etc.) is installed in the information-processing apparatus 1 beforehand. The information provision management means 10 processes at least the information transferred from this information-processing apparatus 1 and provides electronic information contents including display information. Note that if an unspecified number of users commonly operate the information-processing apparatus 1 in the system 100, they download their own user's face image information D0, which has been registered in the information provision management means 10 beforehand, into this information-processing apparatus 1 and use it.

The following will describe an example of authentication processing in this system 100 concerning an information-processing method according to the first embodiment related to the present invention. This embodiment assumes a case where there are prepared at least one information-processing terrane II having the GUI function and processing arbitrary information and an information provision management terrane I, which processes at least the information transferred from the information-processing terrane II and provides the electronic information contents including display information, so that at the information provision management terrane I or the information-processing terrane II, the GUI function of this information-processing terrane II may be used to perform authentication processing for the purpose of identifying an original user.

This system 100 is separately described in the following two cases:

① where in the information provision management terrane I, the GUI function of this information-processing terrane II is utilized to perform authentication processing for the purpose of identifying an original user; and
② where in the information-processing terrane II, the GUI function of this information-processing terrane II is utilized to perform authentication processing for the purpose of identifying an original user.

Although, of course, preferably the information-processing apparatus 1 and the information provision management means 10 are connected to each other by the communication means 4, key information ID indicating that the information has been registered may be distributed utilizing storage medium (e.g., CD-ROM).

[Case ① where authentication processing is performed in information provision management terrane I]

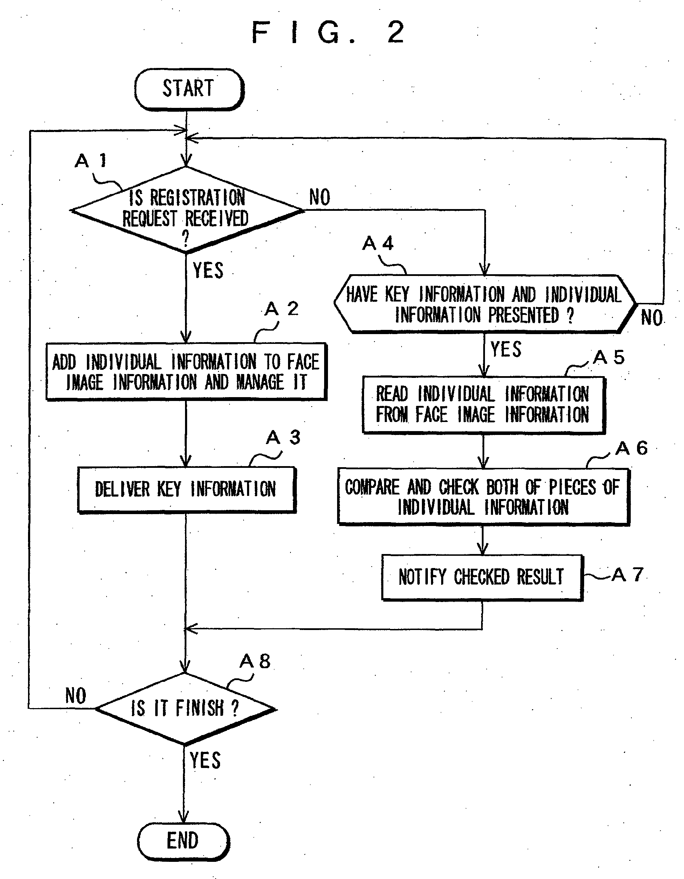

Such a case is assumed that in this system 100, an original user is authenticated at the information provision management means 10. Using this as processing conditions, this information provision management means 10 waits for a request from the information-processing apparatus 1 of a user asking for registration of face image information D1 and individual information D2, at step A1 of a flowchart shown in FIG. 2. When this registration request is received, the process goes to step A2 where the information provision management means 10 conducts management by adding the user's individual information D2 to face image information D1, the registration of which has been requested by the information processing apparatus 1. In this case, to the individual information D2 is added operating-right information that indicates a range in which network-constituent electronic devices including the information provision management means 10 can be operated. Thus, it is possible for the user who, for example, attends a network conference to limit a range in which the mouse can be operated. The process then goes to step A3 where key information ID indicating that the information has been registered is delivered to the information-processing apparatus 1 of the user. Then, the process goes to step A8.

If no registration request is received at step A1, on the other hand, the process goes to step A4 to check whether the user's key information ID and the individual information D2 have been presented from the information-processing apparatus 1 to this information provision management means 10. This operation is done in order to monitor an authentication request sent from the user. If this presentation is not performed, the process returns to step A1. After having received the key information indicating that the information has been registered, the information-processing apparatus 1 of the user presents the key information ID to the information provision management means 10 utilizing the GUI function. This can be done on the assumption that the information-processing apparatus 1 and the information provision management means 10 have been connected to each other by the communication means 4. As the communication means 4, a wireless communication system should preferably be introduced.

Using these as processing conditions, if an authentication request is received by the information-processing apparatus 1 from the user at step A4, the process goes to step A5 where the information provision management means 10 reads the individual information D2 from the face image information D1 based on the key information ID and compares and checks this read individual information with the presented individual information D2 to authenticate the original person.

Therefore, if the individual information D2 read from the face image information D1 agrees with the individual information D2 presented by the user, it is possible to permit him to enter this system. If the individual information D2 read from the face image information D1 does not agree with individual information D2 presented by a third party, on the other hand, it is possible to refuse him from entering this system. This prevents a third party from performing unauthorized use of the network-constituent electronic devices including the information provision management means 10 at this information provision management means 10.

[Case ② where authentication processing is performed in information-processing terrane II]

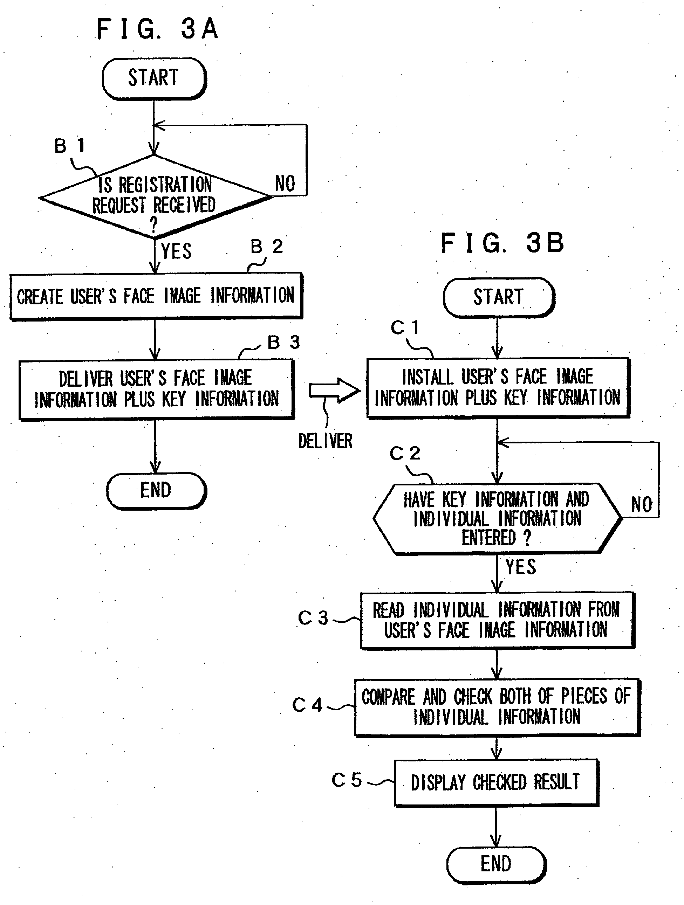

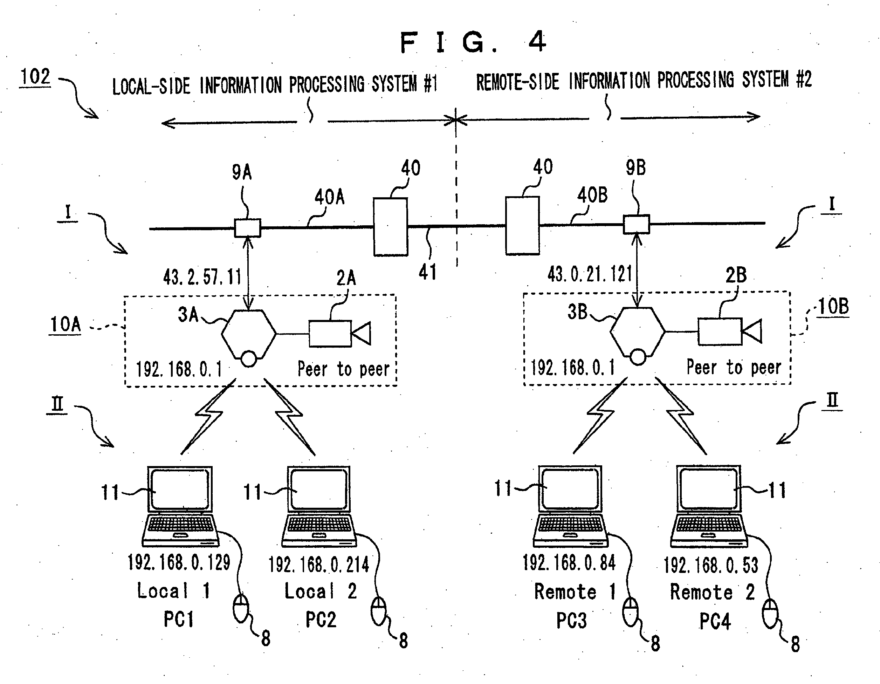

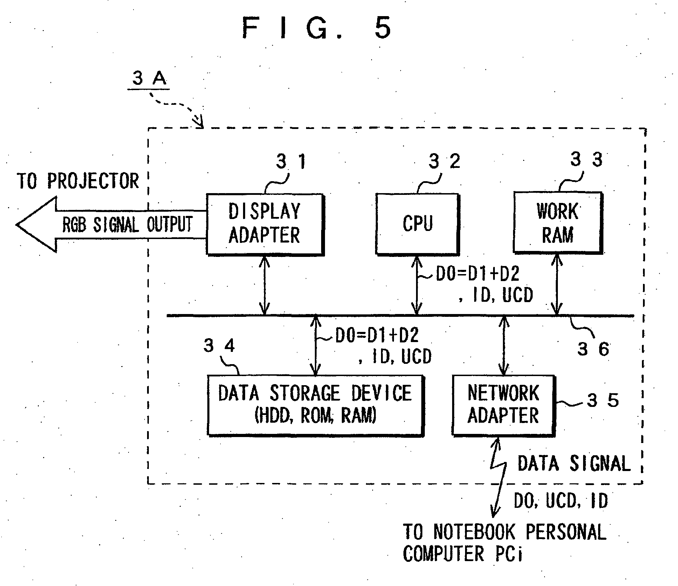

Such a case is assumed that in this system 100, an original user is authenticated at the information-processing apparatus 1. Using this as processing conditions, the information provision management means 10 waits for a registration request of face image information D1 and individual information D2 from the information-processing apparatus 1 of the user at step B1 of a flowchart shown in FIG. 3A. When this registration request is received, the process goes to step B2 where the information provision management means 10 creates user' s face image information D0 by adding the user' s individual information D2 to the face image information D1, the registration of which has been requested by the information processing apparatus 1. The individual information D2 is encrypted into information that can be decrypted by the key information ID and this encrypted individual information D2 is superimposed into image display information for displaying predetermined upper and lower lines in a user's face image. In such a manner, the individual information D2 cannot easily be decrypted or tampered. The process then goes to step B3 where the information provision management means 10 delivers to the user's information-processing apparatus 1 the user's face image information D0 and the key information ID indicating that the information has been registered. In this case, the user's face image information D0 and the key information ID indicating that the information has been registered may be distributed by utilizing a storage medium such as a CD-ROM.

Further, the information-processing apparatus 1 receives (installs) the user's face image information D0 plus the key information ID indicating that the information has been registered, at step C1 of a flowchart shown in FIG. 3B. Then, for example, in the case of connecting the information-processing apparatus 1 and the information provision management means 10 to each other by the communication means 4 to thereby build a network electronic conference system etc., the process goes to step C2 where this information-processing apparatus 1 waits until the key information ID or the individual information D2 is input utilizing the relevant GUI function. If the key information ID or the individual information D2 is input, the process goes to step C3 where at the information-processing apparatus 1, the individual information D2 is read from the user's face image information D0 based on the key information ID. This read individual information D2 is compared and checked with the earlier presented individual information D2 to authenticate the original person at step C4.

In this system 100, image display information constituting the user's face image information D0 contains checked information, so that when a user is authenticated, based on the checked information, code bits of the image display information are added together, whose addition result is compared and checked with an expected addition result based on the checked information. A compared and checked result thereof is displayed on the LCD 11 at step C5. If, as the compared and checked result thereof, the addition result obtained by adding the code bits together and the addition result based on the check information do not agree, the user is refused from entering this system. Alternatively, his right of using the network-constituent electronic devices including the information provision management means 10 is limited. This limitation of user's right of using the devices is conducted specifically, for example, by refusing the user from attending a conference or permitting him to attend the conference in a condition where the user's face image information D0 is indicated in such a manner that the other attendees may easily know that he is yet to be authenticated and also not permitting him to enjoy services such as chatting or file transfer.

In such a manner, according to the network-information-processing system 100 given as the first embodiment related to the present invention, for example, when a user tries to enter this system, at the information provision management means 10 or the information-processing apparatus 1, the GUI function of this information-processing apparatus 1 is utilized to perform authentication processing for the purpose of identifying the original user. Therefore, if individual information D2 read from face image information D1 agrees with individual information D2 presented by the user, it is possible to permit the user to enter this system. If the individual information D2 read from the face image information D1 does not agree with individual information D2 presented by a third party, on the other hand, it is possible to refuse the user from entering this system. This prevents a third party from performing unauthorized use of the network-constituent electronic devices including the information provision management means 10, at this information provision management means 10 or the information-processing apparatus 1.

[Second Embodiment]

In the present embodiment, a remote electronic conference system 102, which is one example of network-information-processing systems, is built and user's face image information D0 is created by information provision management means beforehand and distributed to an information-processing apparatus of each of the users so that the users may be authenticated when they try to enter the conference system.

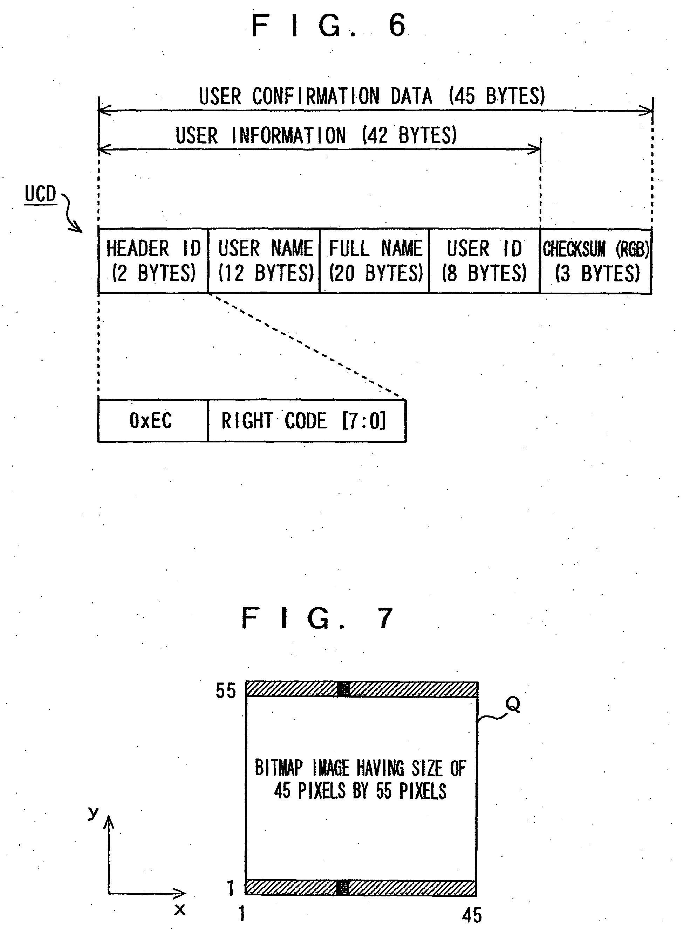

In a remote electronic conference system 102 related to the second embodiment as shown in FIG. 4, a local-side information-processing system #1 and a remote-side information-processing system #2 are connected to each other through HUBs (centralized connectors) 9A and 9B, a gateway 40, communication cables 40A, 40B, and 41, etc., which are each one example of communication means, so that user information may be mutually exchanged between these information-processing systems #1 and #2. In the local-side information-processing system #1, a presentation apparatus 10A, which is one example of the information provision management means, is provided and two notebook personal computers PCi (i=1, 2) are arranged. The presentation apparatus 10A constitutes an information provision management terrane I and the notebook personal computer PCi constitutes an information-processing terrane II. The presentation apparatus 10A and each of the notebook personal computers PC1 and PC2 are connected to each other by a use of a wireless LAN communication system and used. By utilizing a GUI function of any one of the notebook personal computers PC1 and PC2, the presentation apparatus 10A is remote-controlled.

The presentation apparatus 10A has a projector 2A and a communicator 3A. The communicator 3A has a global address (43.2.57:11) and an IP address (192.168.0.1) and is adapted to assist devices including the projector 2A in processing of electronic information based on remote-operation instructions sent from any one of the notebook personal computers PC1 and PC2. The communicator 3A has a personal computer function and is adapted to process information using an input operation function of any one of the notebook personal computers PC1 and PC2. The notebook personal computer PC1 serves as Local 1 and the notebook personal computer PC2 serves as Local 2. The communicator 3A is connected through the local-side HUB 9A, the communication cable 40A, the gateway 40, and the communication cable 41 to the remote-side information-processing system #2.

In the remote-side information-processing system #2, on the other hand, a presentation apparatus 10B, which is one example of the information provision management means, is provided and two notebook personal computers PCi (i=3, 4) are arranged. The presentation apparatus 10B also constitutes an information provision management terrane I and the notebook personal computer PCi also constitutes an information-processing terrane II. The presentation apparatus 10B and each of the notebook personal computers PC3 and PC4 are connected to each other using a wireless LAN communication system and used. By utilizing the GUI function of any one of the notebook personal computers PC3 and PC4, the presentation apparatus 10B is remote-controlled.

The presentation apparatus 10B has a projector 2B and a communicator 3B. The communicator 3B has a global address (43.0.21.121) and an IP address (192.168.0.1) and is adapted to assist devices including the projector 2B in processing of electronic information based on remote-operation instructions sent from any one of the notebook personal computers PC3 and PC4. The communicator 3B also has the personal computer function and is adapted to process information using an input operation function of any one of the notebook personal computers PC3 and PC4. The notebook personal computer PC3 serves as Remote 1 and the notebook personal computer PC4 serves as Remote 2.

The communicator 3B is connected through the remote-side HUB 9B, the communication cable 40B, the gateway 40, and the communication cable 41 to the local-side information-processing system #1. In this electronic conference system 102, the local-side communicator 3A manages as user information the following attendee information, that is, IP addresses of the notebook personal computers PCi of attendees. This attendee information to be managed is as follows:

| <User name> | <IP address> |
|---|---|
| Local 1 | 192.168.0.129 |
| Local 2 | 192.168.0.214 |

Similarly, the remote-side communicator 3B manages as user information the following attendee information, that is, IP addresses of the notebook personal computers PCi of the attendees. This attendee information to be managed is as follows:

| | <IP address> |
|---|---|
| Remote 1 | 192.168.0.84 |
| Remote 2 | 192.168.0.53 |

When the local side and the remote side are connected to each other, these pieces of attendee information are exchanged between the communicators 3A and 3B. The notebook personal computers PCi each process arbitrary information based on a user key ID, which is one example of key information. The user key ID includes a password, fingerprint information, which are used to authenticate an original user. When someone tries to attend a conference, user information (User Information) D2, which is one example of individual information, is read from user icon image information (hereinafter referred to as "user icon image" simply), which is one example of the user's face image information D0, based on the user key ID, and this user information D2 read from the user icon image is compared and checked with user information D2 entered through a keyboard 14. Therefore, it is possible to authenticate an original user at this notebook personal computer PCi.

The following will describe an internal configuration of the communicator 3A. The communicator 3B is the same as the communicator 3A and so its description is omitted.

The communicator 3A shown in FIG. 5 has a personal computer function and is adapted to process information by operating a mouse of the notebook personal computer PCi. It processes information transferred from a user's notebook personal computer PCi and provides electronic information contents including display information. The communicator 3A has a data bus 36, to which data bus 36 are connected a display adapter 31, a CPU32, a work RAM33, a data storage device 34, a network adapter 35, etc. The display adapter 31 has a function for processing presentation materials to create an RGB signal. This RGB signal based on the presentation materials is output to the projector 2A etc. The work RAM33 temporarily stores a private IP address and transfer information related to the presentation materials.

The data storage device 34 is constituted of a hard disk (HDD), an ROM, and an RAM, which are each one example of storage means, not shown. The hard disk stores at least the user's face image information D1 and the user information D2, the registration of which has been requested by the notebook personal computer PCi. Besides these, it stores the presentation materials. In the ROM, a control program (hereinafter referred to as " system-assisting-control program") for assisting an electronic conference system is described. The system-assisting-control program is comprised of basic software for operating CPU 32 and a presentation-data-processing program.

The network adapter 35 is adapted to send and receive presentation data and a variety of kinds of commands to and from the notebook personal computer PCi. The CPU 32 is one example of control apparatus and controls input/output operations to the display adapter 31, the work RAM 33, the data storage device 34, the network adapter 35, etc. based on the system-assisting-control program. For example, the CPU 32 provides control by adding the user information D2 to the user's face image information D1, the registration of which has been requested by the user's notebook personal computer Pci, and delivers the user key ID indicating that the information has been registered to the user's notebook personal computer PCi.

Then, when the CPU 32 of this communicator 3A is presented with the user key ID by means of the notebook personal computer PCi, it reads the user information D2 from the face image information D1 based on the user key ID, and compares and checks this read user information D2 with presented user information D2 to authenticate the original user. Therefore, this corresponds to the case ① where authentication processing is performed by the information provision management terrane I, thus enabling authenticating the original user at this presentation apparatus 10A etc.

In the case ② where authentication processing is performed in the information-processing terrane II, on the other hand, the data storage 34 stores at least the user's face image information D1 and the user information D2, the registration of which has been requested by the notebook personal computer PCi. By using a user-icon creation/registration program etc., the CPU 32 adds the user information D2 to the user's face image information D1 to create a user icon image and delivers this user icon image and user key ID indicating that the information has been registered to the user's notebook personal computer PCi. Therefore, it is possible to authenticate the original person by comparing and checking at this notebook personal computer PCi the user information D2 read from the user icon image based on the user key ID with the presented user information D2. It is thus possible to authenticate the original user on the side of the notebook personal computer PCi.

The following will describe an example of formatting user confirmation data UCD. In this embodiment, the case ② is assumed where authentication processing is performed in the information-processing terrane II. According to a data format example shown in FIG. 6, to 42-byte user information D2 is added a three-byte checksum, which is one example of check information, so that the CPU32 creates 45-byte user confirm data (UCD). The 42-byte user information D2 falls in a range subject to encryption.

In top two bytes of this user confirmation data UCD, a header ID is written. A header code (fixed value=0xEC) is written on the header ID to distinguish ordinary attendance and guest attendance from each other. Note that 0x00 is written for guest attendance. On the lower order side of the header code, a right code is written. On the right code, contents concerning an operating right during conference attendance, which has been set by the manager at the time of registration, are written.

The right code is represented in eight bits [bit 7 → bit 0, 7: 0]. To permit/refuse attendance, "1" or "0" is written, where "1" indicates permission. Bits 7 and 6 are reserved (0) and in bit 5 is written permission/refusal of a step-up setting right of the communicator. In bit 4 is written permission/refusal of a presentation-operating right. In bit 3 is written permission/refusal of transfer of a file to the projector (viewer) . In bit 2 is written permission/refusal of display switching of the projector. In bit 1 is written permission /refusal of chat operation. In bit 0 is written permission/refusal of file transfer operation.

On the lower order side of the header ID, 12 bytes are allocated as a user-name writing field. A user name can be written in up to 12 alphanumeric characters. On the lower order side of the user name, 20 bytes are allocated as a full-name writing field. A full name can be written in up to 20 alphanumeric characters. On the lower order side of the full name, eight bytes are allocated as a user-ID writing field. A user ID can be written in up to eight alphanumeric characters. On the lower order side of the user information D2, a three-byte checksum is written.

The following will describe an example of superimposition (embedding) into a face image file. In this embodiment, a user's face image is prepared beforehand. Face image data (image display information), which has been obtained by photographing user's face regions by a digital camera beforehand, is used. According to an example of superimposition into a face image file shown in FIG. 7, a user icon screen Q measures 55 vertical pixels by 45 horizontal pixels, while a user's face image is composed of a 24-bitmap image, which can roughly be accommodated in a size of 55 pixels by 45 pixels. Each pixel of this bitmap image is comprised of three bytes of R (red: one bit), G (green: one byte), and B (blue: one byte).

In this embodiment, user confirmation data UCD after being encrypted is superimposed (written) into a low-order bit of image display data, which displays each of upper and lower lines in the user's face image. The user confirmation data UCD is composed of user information D2 plus checksum. In this embodiment, an x'th byte as counted from the top of the user confirmation data UCD is defined as the following expression (1):

$$UCD [x] [7:0] \qquad \text{Expression (1)}$$

Since the user's face image measures 55 vertical pixels by 45 horizontal pixels, the following expression (2) is derived from the format example shown in FIG. 6:

$$UCD [44:0] [7:00]$$

$$=(Header\ ID\ [1:0]\ [7:0]$$

$$User\ Name\ [11:00]\ [7:00],$$

$$Full\ Name\ [19:0]\ [7:00],$$

$$User\ ID\ [7:0]\ [7:0],$$

$$Check\ Sum\ [2:0]\ [7:0]) \qquad \text{Expression (2)}$$

Further, for R-, G-, and B-color data of an x'th pixel as counted from the left end of a y'th line, original data is defined as given in the following expression (3):

$$Rorg [x] [y] [7:0]$$

$$Gorg [x] [y] [7:0]$$

$$Borg [x] [y] [7:0] \qquad \text{Expression (3)}$$

Furthermore, R-, G-, and B-color data of an x'th pixel as counted from the left end of a y'th (y=55) line after the user confirmation data UCD is inserted is defined as given in the following expression (4):

$$R [x] [55] [7:01]$$

$$=(Rorg [x] [7:1], UCD [x] [7]),$$

$$G [x] [55] [7:0]$$

$$=(Gorg [x] [7:1], UCD [x] [6]),$$

$$B [x] [55] [7:0]$$

$$=(Borg [x] [7:2], UCD [x] [5:4]) \hspace{3cm} \text{Experssion (4)}$$

Further, R-, G-, and B-color data of an x'th pixel as counted from the left end of a y'th (y=1) line after the user confirmation data UCD is inserted is defined as given in the following expression (5):

$$R [x] [1] [7:0]$$

$$=(R [x] [7:1], UCD [x] [3]),$$

$$G [x] [1] [7:0]$$

$$=(G [x] [.7:1], UCD [x] [2]),$$

$$B [x] [1] [7:0]$$

$$=(B [x] [7:2], UCD [x] [1:0]) \hspace{3cm} \text{Expression (5)}$$

In this embodiment, for each of the R, G, and B colors of the bitmap image, a three-byte checksum is defined as given in the following expression (6):

$$Check Sum [2][7:0]=CSR [7:0]$$

$$Checksum [1] [7: 0]=CSG [7:0]$$

$$Check Sum [0][7:0]=CSB [7:0] \hspace{3cm} \text{Experssion (6)}$$

A checksum for adding together code bits in an x-direction for the R, G, and B colors of a map image and adding together codes bits in a y-line direction is defined as given in the following expression (7):

$$CSR [7:0]$$

$$=\text{total sum of } R[x] [y] [7:0] (1\leftarrow x\leftarrow42, 1\leftarrow y\leftarrow55),$$

$$CSG [7:0]$$

$$=\text{total sum of } G[x] [y] [7:0] (1\leftarrow x\leftarrow 42, 1\leftarrow y\leftarrow 55),$$

$$CSB [7:0]$$

$$=\text{total sum of } B[x] [y] [7:0] (1\leftarrow x\leftarrow 42, 1\leftarrow y\leftarrow 55) \hspace{2cm} \text{Expresion (7)}$$

The following will describe an example of creating a user icon image. In the present embodiment, when a user utilizes a target network electronic conference system, network education system, etc., he requests a system manager to create a user icon image and register it beforehand. This embodiment assumes a case where a user icon image is created using a personal computer etc. of the system manager. Of course, it may be created by the communicator 3A etc. as far as the system manager manages the communicator 3A. In either case, it is preferably registered on the day before a conferencing day.

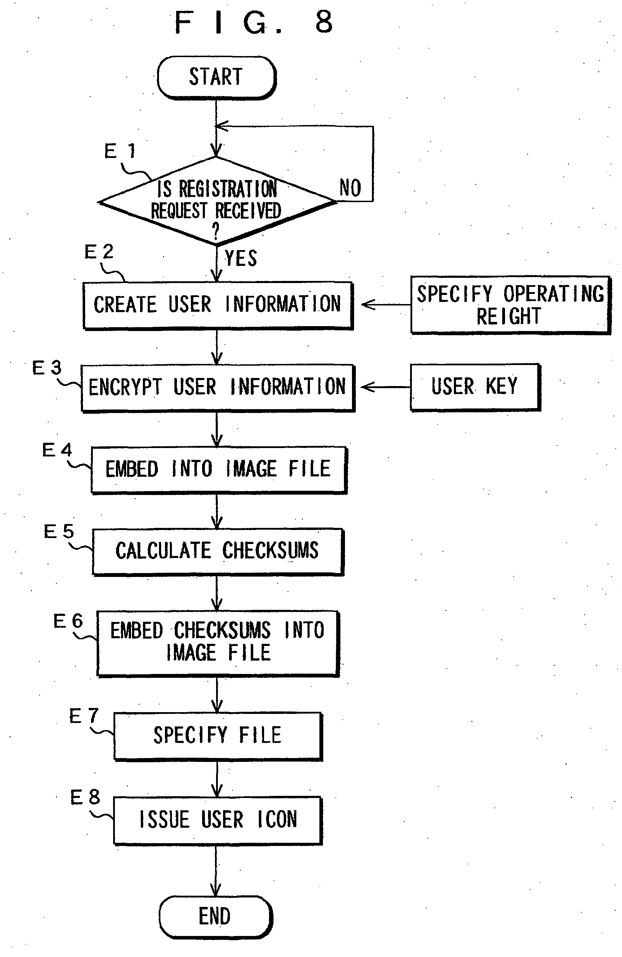

Using these as processing conditions, at the personal computer, the communicator 3A, etc. of the system manager, the process waits for a request from the user's notebook personal computer PCi asking for registration of icons of face image information D1 and user information D2, at step E1 of a flowchart shown in FIG. 8. If this icon registration request is received, the process goes to step E2 where at the communicator 3A etc., created is a user icon image adding the user information D2 to the user's face image information D1, the registration of which has been requested by the notebook personal computer Pci. Note that to perform steps E2-E8, an icon creation/registration program resident in the system manager is used. In this case, the manager acquires from the user a facial portrait, a user key ID (key information), a user name, a full name, and a user ID. In this case, as the user ID, an employee number, a telephone number, a division/section code, etc. is used. In addition to acquisition of these pieces of information, the manager sets a permissible extent of the operating right of the icon-registration-requesting person (user) on the system 102. This setting is limited by writing its contents in the right code of the user confirmation data UCD.

In this case, at the system manager's personal computer, communicator 3A or the like, created is a user information D2 (42 bytes), which is composed of a header code (2 bytes: 0xEC**) where ** indicates a right code (one byte), a user name (12 bytes: 12 alphanumeric characters), a full name (20 bytes: 20 alphanumeric characters), and a user ID (eight bytes: eight alphanumeric characters). Then, at step E3, based on the user key ID (password), the user information D2 is encrypted in such a manner that it can be decrypted. As a cryptographic algorithm, a data encryption standard (DES) is used. When the user, for example, tries to attend a conference by logging in this system 102, he enters this user key ID so that he may be checked on whether he has been registered regularly.

Then, the process goes to step E4 where the user information D2 after being encrypted is superimposed into a user icon image Q shown in FIG. 7. The user information D2 is embedded in such a manner as not to deteriorate a face image and at an inconspicuous position. In this embodiment, it is embedded in low-order bits of image data of R, G, and B colors in which upper and lower lines of the user icon screen Q are each displayed. It is thus possible to prevent the user information D2 from being easily decrypted or tampered. Then, at step E5, the process calculates a checksum of each of the R, G, and B colors for the image data embedded in the user icon screen Q and, at step E6, the checksums related to the R, G, and B colors are embedded in the face image data again. If the face image data is tampered, it can be decided by using a check function of this checksum.

At step E7, a created file name is registered as a name related to the user name. It is registered in this communicator 3A etc., if the communicator 3A etc. is used as a server apparatus in the personal computer of system manager or this system 102. In such a manner, it is possible to refer or issue (deliver) a user icon image and a user key ID indicating that it has been registered, from the communicator 3A etc. at step E8 always. In this case, the system 102 is operable only in such an environment that the server apparatus etc. can be accessed always, so that in such a case it is possible to record a user icon image in a storage medium such as a CD-ROM and directly issue it to the icon-registration-requesting person so that it may be placed on the user's notebook personal computer PCi.

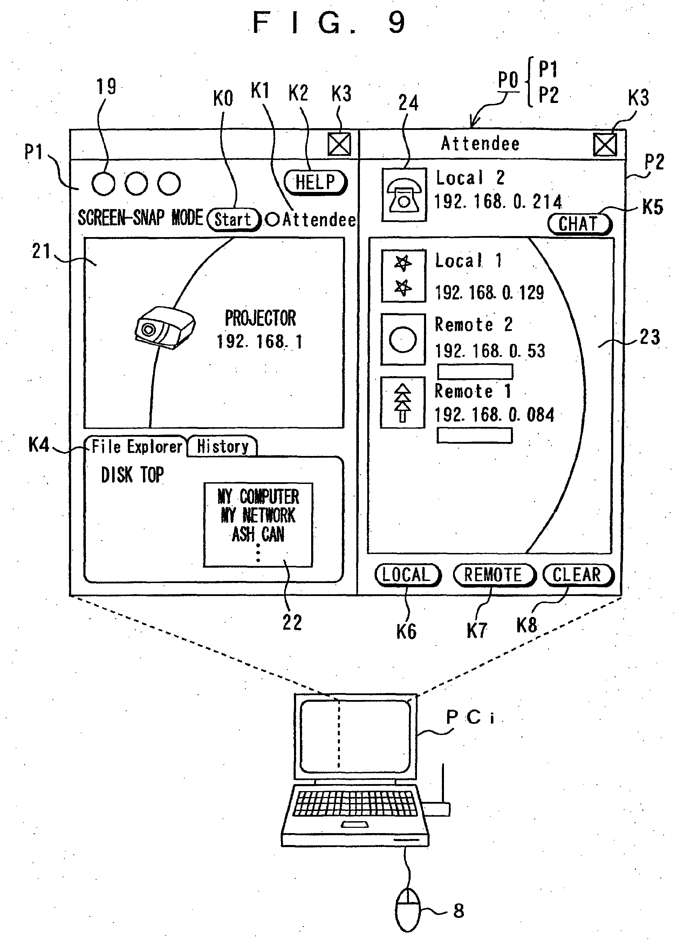

The following will describe a display example of a GUI operation screen P0 at the time of activation on the notebook personal computer PCi (hereinafter referred to as "GUI-activation-time screen"). The GUI-activation-time screen P0 shown in FIG. 9 is displayed on the notebook personal computer PCi at the time of activation, that is an example of display based on GUI program of client. The GUI-activation-time screen P0 employs a split-by-two display system. On the left side in this screen P0, a GUI operation screen (hereinafter referred to as "control screen") P1 is displayed and, on its right side, an attendee screen P2 is displayed. In this case, on the control screen P1 a selection screen due to a screen-snap mode is displayed.

On this control screen P1, at its middle an area 21 for device icons is provided to display icons of projectors etc. Above this area 21, a "start" or "stop" button K0 at a time of the screen-snap mode is displayed. In its right-side neighbor, an attendee button K1 is displayed and, above it a "HELP" button K2 is displayed, and in an outer frame above this control screen P1, a "close" button K3 is displayed. Below the area 21, a tab K4 for "file explorer/history" is displayed and within this tab K4, file list area 22 is displayed. Note here that at the left top corner above the control screen P1, a logo mark 19 representing an enterprise image can be displayed.

Further, on the attendee screen P2, at its middle an area 23 for an attendee user list is provided to display IP addresses etc. of conference attendees or their notebook personal computers PCi together with their icons. Above this area 23, a user's information area 24 is provided, in which a user icon image based on user confirmation data UCD is displayed. In addition to it, in the user information area 24 is displayed an IP address etc. of a specific notebook personal computer PCi on the local side. At the right top corner in the attendee screen P2, a "chat" button K5 is displayed. Further, at a bottom of the attendee screen P2, a local button K6, a remote button K7, a clear button K8, etc. are displayed.

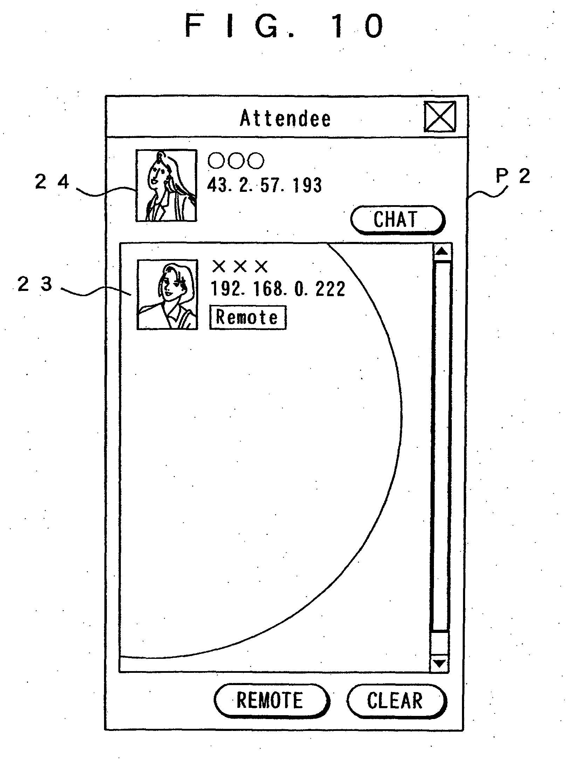

The following will describe a display example of a user icon image on the attendee screen P2. According to the attendee screen P2 shown in FIG. 10, a user icon image is displayed in the user information area 24. In this embodiment, a face image of a user who is permitted to attend a conference, a user name ○○○, and an IP address of this notebook personal computer PCi of 43.2.57.193 are displayed. Note that in the attendee user list area 23, a face image of a remote conference attendee, a user name XXX, and an IP address of this notebook personal computer PCi of 192.168.0.222 are displayed.

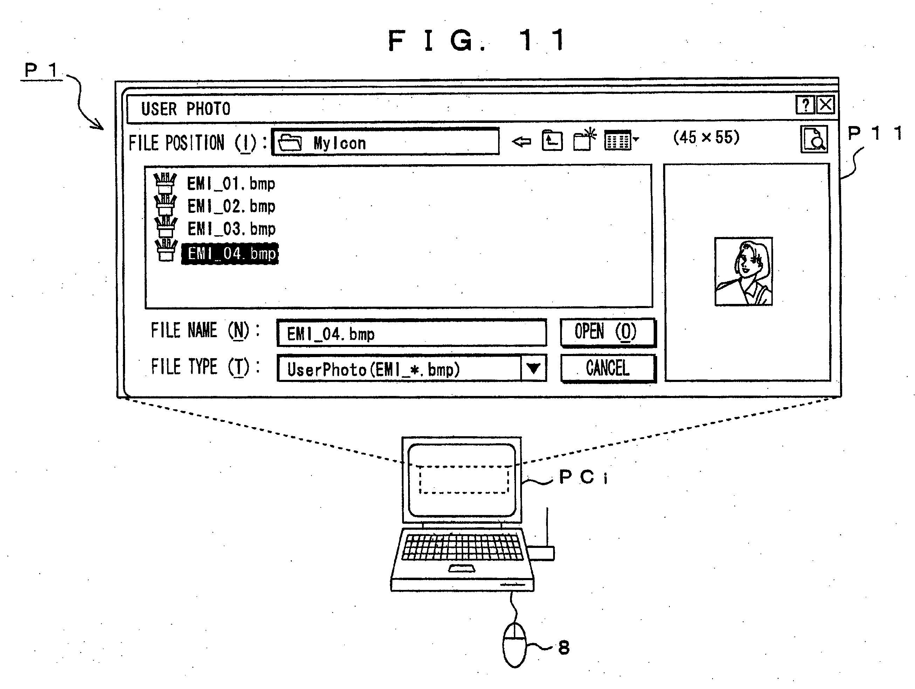

The following will describe a display example of a file confirmation screen P11 in the control screen P1. According to the file confirmation screen P11 shown in FIG. 11, such a case is assumed that an unspecified number of users, that is, other attendees use this notebook personal computer to try to attend a conference. In this case, by opening the file confirmation screen P11 concerning a user's photo and entering a user name XXX, a list of related image files is displayed. By selecting (clicking on) the user name XXX in this list, face images of remote conference attendees are displayed in a predetermined display region next to the list. A user name is saved in this notebook personal computer PCi by specifying a file name and a file type. This is because there may be a case where a remote conference attendee would attend a local side on loan.

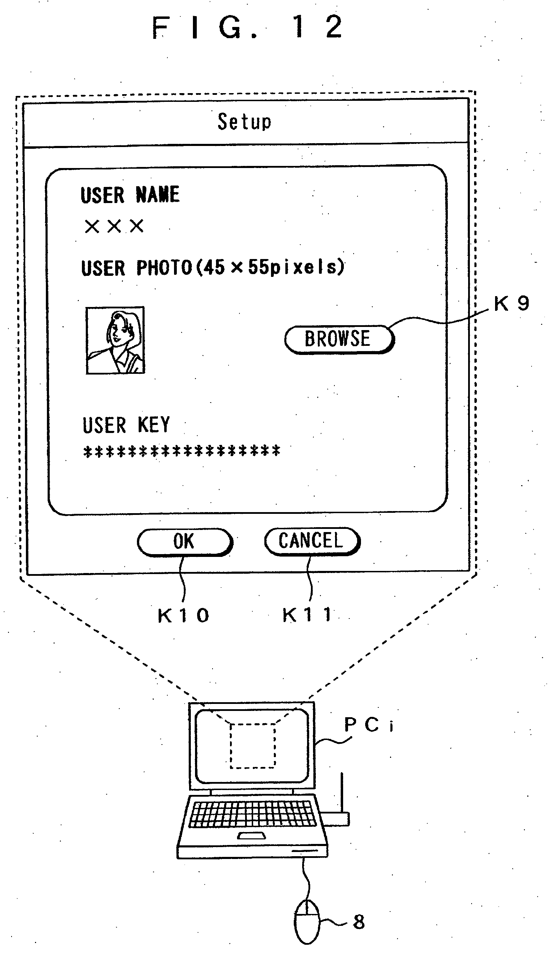

The following will describe a display example of a setup screen P12 in the control screen P1. The setup screen P12 shown in FIG. 12 is an icon screen, which has been switched in display by selecting a user name XXX on the file confirmation screen P11. This setup screen P12 displays on it USER NAME XXX, a face image of a remote conference attendee as USER PHOTO (45 x 55 pixels), and USER KEY. As USER KEY, a password "********" is to be entered. In addition to these, the setup screen P12 displays a BROWSE key K9, an OK key K10, and a CANCEL key K11. If a password is correct, a remote conference attendee can attend a local side conference.

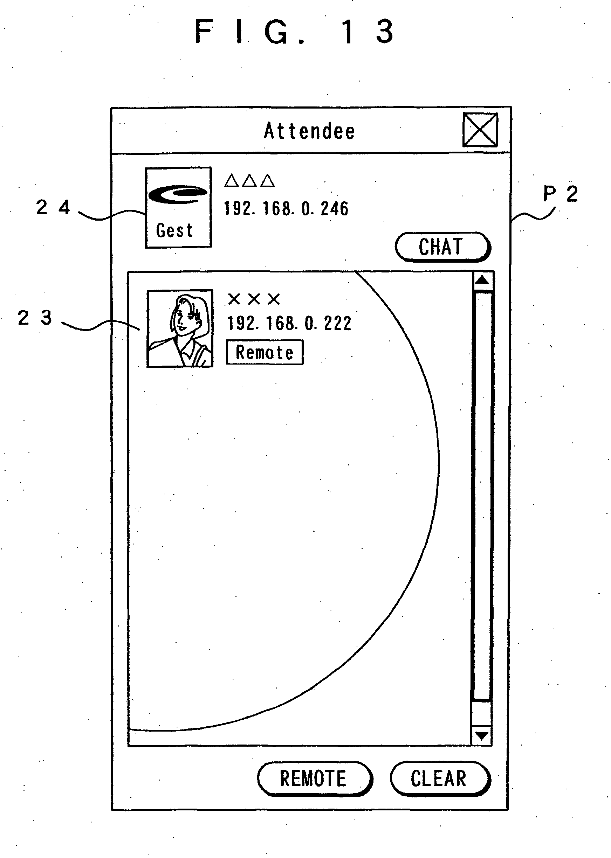

The following will describe a display example of a limited user icon image on the attendee screen P2. According to the attendee screen P2 shown in FIG. 13, in the user information area 24, a limited user icon image is displayed. In this embodiment, a guest who has been permitted to attend a conference but whose operating right is limited, a user name △△△, and an IP address of his notebook personal computer PCi of 192.168.0.246 are displayed. Note that in the attendee user list area 23, a face image of a remote conference attendee, a user name XXX, and an IP address of this notebook personal computer PCi of 192.168.0.222 are displayed.

The following will describe a processing example at a notebook personal computer PCi when a conference of the remote electronic conference system 102 is attended. In this embodiment, a flow is shown in a case where a user attends a conference on the local side. For example, such a case is assumed that the notebook personal computer PCi and the communicator 3A etc. are connected to each other by the communication means 4 so that the user may attend the remote electronic conference system 102 etc. In this embodiment, it is supposed that some user's user icon image plus a user key ID indicating that the information has been registered are installed in this notebook personal computer PCi beforehand. Such a case is numerated that in this system 102, check information (Check Sum) is contained in image display information that constitutes the user icon image so that an original person may be authenticated on the basis of the check information in user authentication. Using this as processing conditions, description is made in separate cases where a previous user uses this notebook personal computer PCi currently also and a remote side user goes on loan to the local side to use this PCi. It is to be noted that if the user is a guest, such a case is assumed that a user icon image has been registered on the remote side.

[Case where previous user uses this PCi currently also]

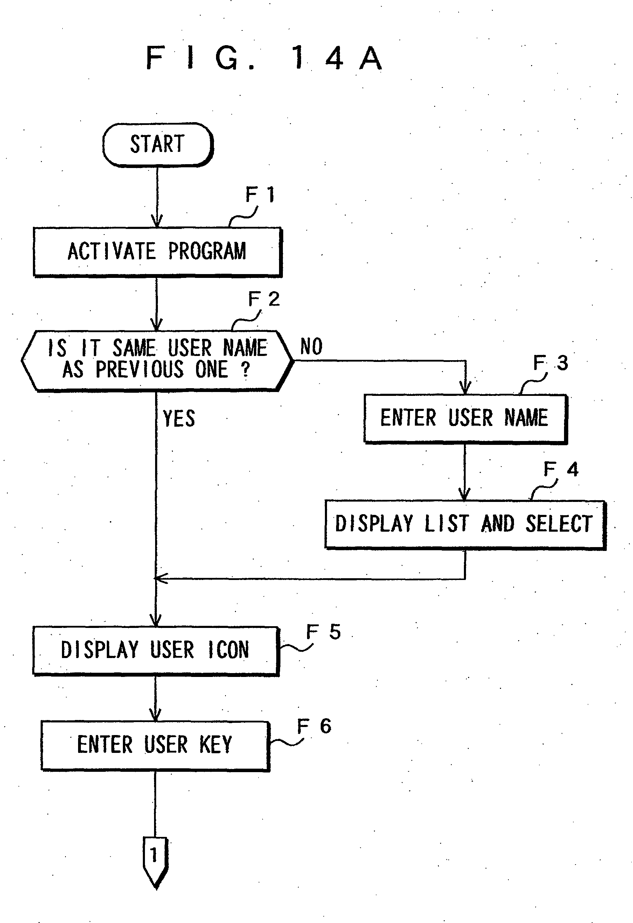

In a case where a previous user attends this electronic conference system 102 currently also, setup has been performed already. When a client GUI program is activated at step F1 of a flowchart shown in FIG. 14A, at the notebook personal computer PCi such a GUI-activation-time screen P0 as shown in FIG. 9 is displayed on an LCD 11. At step F2, control branches off at this notebook personal computer PCi in accordance with whether the current user name is the same as the previous one, so that, since the current user of the notebook personal computer PCi is the same as the previous one, the process goes to step F5 to display his user name and icon image. In this case, according to the attendee screen P2 shown in FIG. 10, in the user information area 24 the user icon image is displayed. In this embodiment, a face image of a user who has been permitted to attend the conference, a user name ○○○, and an IP address of this notebook personal computer PCi of 43.2.57.193 are displayed.

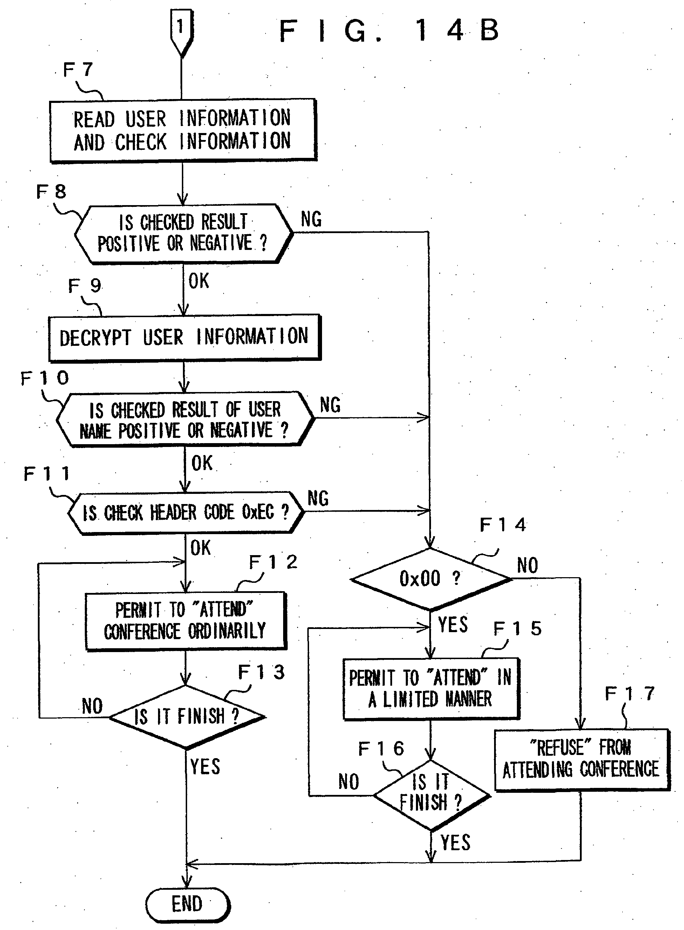

Then, at step F6, at this notebook personal computer PCi, a user key ID and user information D2 are entered using the GUI function. When the user key ID and the user information D2 are entered in such a manner, the 42-bit user information D2 is confirmed at steps F7-F11, and F14 shown in FIG. 14B. In this embodiment, at step F7, at the notebook personal computer PCi, the user information D2 and check information are read (cut out) from a user icon image based on the user key ID. It is done so in order to confirm matching of a checksum. In this case, based on the above-mentioned expression (7), code bits related to R, G, and B colors of a bitmap image (image display information) are added together in an x-direction, while codes bits are added together in a y-line direction. By this checksum calculation, a resultant sum obtained by adding the code bits together is compared and checked with an expected resultant sum based on the check information. If, as the compared and checked result thereof, the resultant sum obtained by adding the code bits together does not agree with that based on the check information, the process decides the compared result to be negative (NG) and goes to step F14.

If this collation result is positive (OK), on the other hand, the process goes to step F9 where the user information D2 embedded in the user icon image is decrypted. The process then goes to step F10 to compare and check the user information D2 after being decrypted with the previously registered user information D2. By confirming matching of the user name, it is possible to confirm whether the user has been registered regularly, at this notebook personal computer PCi. Furthermore, at step F11, a header code is checked for whether it is 0xEC. By confirming matching of the header code, it is decided, for example, whether e relevant user tries to attend a conference ordinarily on the local side or as a guest on loan from the remote side. In this case, a right code is used to determine an operation range in the system 102.

These checked results thereof are displayed on the LCD11. At step F11, if the header code is 0xEC, the process decides that it is an ordinary conference attendance on the local side and goes to step F12 to permit him to enter this conference system (see FIG. 10). Then, at step F13, at this notebook personal computer PCi, the process checks whether it is an end of the conference. In this embodiment, by detecting that an exit key is pressed at this notebook personal computer PCi, the conference is finished. If the conference is not to be finished, the process returns to step F12 to continue the conference.

[Case where user (guest) different from previous user uses this PCi]

For example, such a case is assumed that a remote-side user goes on loan to the local-side electronic conference system 102 to use this notebook personal computer PCi. In this case, setup on the local side for this user has not yet been performed. Therefore, when the client GUI program is activated at the notebook personal computer at step F1 of a flowchart shown in FIG. 14A, such a GUI-activation-time screen P0 as shown in FIG. 9 is displayed on the LCD11.

Control branches off in accordance with whether the current user name is the same as the previous one at step F2, so that, since the current user of the notebook personal computer PCi is different from the previous one, the process goes to step F4. At this step F4, when a user name XXX is entered, the file confirmation screen P11 is opened in the GUI-activation-time screen P0 shown in FIG. 9 with reference to a user photo, to display a list of image files related to the user name XXX.

By selecting (clicking on) the user name XXX in this list, face images of conference attendees whose setup has been performed beforehand are displayed in a predetermined display region next to the list. In terms of the face image, the user icon files already registered in the server apparatus or the user's apparatus are listed on the basis of a bitmap file of a file name containing a character string of the user name. The user name is saved in this notebook personal computer PCi by specifying a file name and a file type. The file confirmation screen P11 shown in FIG. 11 is switched in display to the setup screen P12 shown in FIG. 12. This setup screen P12 displays USER NAME XXX, a face image of a Remote conference attendee as USER PHOTO (45 x 55 pixels), and USER KEY. As USER KEY, a password "********" is to be entered. In such a manner, setup of the remote-side user on the local side is finished. This is because such a case (case of a guest) may be thought of that as in this case, a remote-side conference attendee would go on loan to the local side to enter the electronic conference system 102. Note that those not qualified to attend the conference and yet to be registered are not listed in display. Then, the process goes to step F5 where a user icon image of the guest is displayed on the attendee screen P2 shown in FIG. 13. According to the attendee screen P2 shown in FIG. 13, in the user information area 24 a limited user icon image is displayed. In this embodiment, a guest who has been permitted to attend the conference but whose operating right is limited, a user name ΔΔΔ, and an IP address of his notebook personal computer PCi of 192.168.0.246 are displayed.

Then, the process goes to step F6 where a user key ID or user information D2 is entered using the GUI function. Then, the process goes to step F7 where at the notebook personal computer PCi, the user information D2 and the check information are read from a user icon image based on the user key ID. It is done so in order to confirm matching of a checksum. In this case, code bits of the image display information are added together to compare and check a resultant sum obtained by adding the code bits together with an expected resultant sum based on the check information. If, as the compared and checked result thereof, the resultant sum obtained by adding the code bits together does not agree with that based on the check information, the process decides the checked result to be negative (NG) and goes to step F14.

If the compare and check is positive (OK), on the other hand, the process goes to step F9 where the user information D2 embedded in the user icon image is decrypted. The process then goes to step F10 to compare and check the user information D2 after being decrypted with the previously registered user information D2. By confirming matching of the user name, it is possible to confirm whether the user has been registered regularly, at this notebook personal computer PCi.

Furthermore, at step F11, a header code is checked for whether it is 0xEC. In this case, the user tries to attend the conference on loan as a guest from the remote side and the head code is 0x00 at step F15, so that his operation range is limited by the right code in the system 102. At step F15, a using right of the network-constituent electronic devices including the communicator 3A is limited. This limitation is conducted specifically, for example, by refusing the user from attending a conference or permitting him to attend the conference in a condition where the user icon image is displayed in such a manner that the other attendees may easily know that he is yet to be authenticated and also not permitting him to enjoy services such as chatting or file transfer.

In such a manner, he is permitted to enter an electronic conference system as a guest in a condition where his operation right is limited (see FIG. 13). At step F16, at this notebook personal computer PCi, the process checks whether it is an end of the conference. In this embodiment, by detecting that the exit key is pressed at this notebook personal computer PCi, the conference is finished. If the conference does not end, the process returns to step F15 to continue the conference. Note that in a case where the checked result is NG at step F8, and where user name is not correct at step 10 and if the header code is not 0xEC, the process goes to step F14 to check whether the header code is 0x00. If the header code is 0x00 and, in addition, nothing is written, the process goes to step F17 to refuse the user from entering this system 101. It is done so in order to prevent him from entering this electronic conference system 102. It is thus possible to build such a mechanism that a user icon can be used only by a specific user.

In such a manner, according to the remote electronic conference system 102 and the relevant information processing method given as the embodiments related to the present invention, for example, when a user tries to enter this system 102 at the communicator 3A or the notebook personal computer PCi, the GUI function of this information processing apparatus 1 is utilized to perform authentication processing for the purpose of identifying the original user. Therefore, if user information D2 read from face image information D1 agrees with user information D2 presented by the user, it is possible to permit him to enter this system 102. If the user information D2 read from the face image information D1 does not agree with a user information D2 presented by a third party, on the other hand, it is possible to refuse him from entering this system. It is thus possible to prevent unauthorized use by a third party of the network-constituent electronic devices including the communicator 3A, at this communicator 3A or the notebook personal computer PCi.

Although in the present embodiments a remote electronic conference system has been described with reference to a network information processing system, the present invention is not limited to it; for example, also in a network education system, a network game system, etc., it is possible to prevent unauthorized use by a third party of network-constituent electronic devices including this information provision management terrane I.

## PROBABILITY OF UTILIZED INDUSTRIALIZATION

The present invention is well applicable to a network conference system, a network education system, a network game system, etc.

## Claims

1. A network information processing system in which a plurality of network-constituent electronic devices is connected to a network, said system comprising:

   at least one information-processing apparatus having an input operation function to process arbitrary information; and

   information provision management means for processing information transferred from the information-processing apparatus, wherein said information provision management means registers beforehand image information and individual information concerning a user as related to each other and delivers key information to said information-processing apparatus of said user, said key information indicating that said information has been registered; and

   wherein, when receiving said key information from said information-processing apparatus and presenting with this key information, said information provision management means reads said individual information from said image information based on the key information and checks this read individual information with presented individual information to authenticate said user.

2. The network information processing system according to claim 1, wherein individual information for identifying an original person is superimposed into a face image concerning image information of said user; and
   wherein said individual information superimposed into said face image is read to authenticate said original user.

3. The network information processing system according to claim 1, wherein information of an operating right is added to said individual information, said information of the operating right indicating a range in which network-constituent electronic device including said information provision management means is operated.

4. The network information processing system according to claim 1, wherein said individual information is encrypted into information that is decrypted using said key information; and
wherein said individual information after being encrypted is superimposed into image display information that indicates a predetermined line in a face image of said user.

5. The network information processing system according to claim 1, wherein image display information that constitutes face image information concerning image information of said user contains checked information; and
wherein, when said user is authenticated, code bits of said image display information are added together based on said checked information and an addition result obtained by adding said code bits together and an expected addition result based on said checked information are compared and checked.

6. The network information processing system according to claim 5, wherein if, as said compared and checked result thereof, said addition result obtained by adding said code bits together and said addition result based on said check information do not agree, said user is refused from entering said system or a right of using network-constituent electronic devices including said information provision management means is limited.

7. The network information processing system according to claim 1, wherein when said information-processing apparatus is operated commonly by an unspecified number of users, said users download their user image information, which has been registered in said information provision management means beforehand, into said information processing apparatus and use it.

8. An information provision management apparatus for processing information transferred from an information-processing apparatus of a user and providing electronic information contents including display information, said apparatus comprising:

   storage means for storing face image information and individual information of a user, said face image information and individual information being registered from this information-processing apparatus; and
   a control apparatus for managing said user's face image information, the registration of which has been requested by said information-processing apparatus, with the face image information adding individual information or creating said user's face image information and delivering to this user's information-processing apparatus said user's face image information and/or key information indicating that said information has been registered,

   wherein when said information-processing apparatus presents said key information to the control apparatus, said individual information is read from said face image information based on the key information and compares and checks this read individual information with presented individual information to authenticate an original person.

9. An information processing apparatus for processing arbitrary information based on key information to authenticate an original user, said apparatus comprising:

   input means for inputting said key information;
   storage means for storing user's face image information obtained beforehand and key information indicating that said information has been registered; and
   a control apparatus for reading said user's face image information from said storage means based on said key information input from said input means and reading individual information from said user's face image information and comparing and checking said individual information read from said user's face image information with individual information input by said input means to authenticate said original user.

10. An information processing method for processing information by connecting a plurality of network-constituent electronic devices to a network, said method comprising the steps of:

   preparing beforehand at least one information-processing terrane having an input operation function to process arbitrary information and an information provision management terrane for processing information transferred from said information-processing terrane;

registering beforehand in this information provision management terrane user's image information and individual information in a condition where they are related to each other and delivering to said user's information-processing terrane key information indicating that said information has been registered; and

when said key information is received from said user's information-processing terrane and presented, reading said individual information from said image information based on said key information and checking this read individual information with presented individual information to authenticate said user.

11. The information processing method according to claim 10, wherein operating right information indicating a range in which said network-constituent electronic device including said information provision management terrane is operated is added to said individual information.

12. The information processing method according to claim 10, wherein said individual information is encrypted into information that is decrypted using said key information; and

wherein said individual information after being encrypted is superimposed into image display information that displays a predetermined line in a face image of said user.

# F I G. 1

100

I

10 → INFORMATION PROVISION MANAGEMENT MEANS → TO ANOTHER SYSTEM

$D0 = D1 + D2, ID$

4

$D0 = D1 + D2, ID$

II

12 STORAGE MEANS ↔ 13 CONTROL APPARATUS

11 LIQUID CRYSTAL DISPLAY

14

8

1

12 STORAGE MEANS ↔ 13 CONTROL APPARATUS

11 LIQUID CRYSTAL DISPLAY

14

8

1

12 STORAGE MEANS ↔ 13 CONTROL APPARATUS

11 LIQUID CRYSTAL DISPLAY

14

8

1

EP 1 447 751 A1

# FIG. 2

START

A 1 · IS REGISTRATION REQUEST RECEIVED ? — NO

YES

A 4 · HAVE KEY INFORMATION AND INDIVIDUAL INFORMATION PRESENTED ? — NO

YES

A 2 · ADD INDIVIDUAL INFORMATION TO FACE IMAGE INFORMATION AND MANAGE IT

A 5 · READ INDIVIDUAL INFORMATION FROM FACE IMAGE INFORMATION

A 3 · DELIVER KEY INFORMATION

A 6 · COMPARE AND CHECK BOTH OF PIECES OF INDIVIDUAL INFORMATION

A 7 · NOTIFY CHECKED RESULT

A 8 · IS IT FINISH ?

NO

YES

END

# FIG. 3A

START

B1 — IS REGISTRATION REQUEST RECEIVED ? — NO

YES

B2 — CREATE USER'S FACE IMAGE INFORMATION

B3 — DELIVER USER'S FACE IMAGE INFORMATION PLUS KEY INFORMATION

END

⇒ DELIVER

# FIG. 3B

START

C1 — INSTALL USER'S FACE IMAGE INFORMATION PLUS KEY INFORMATION

C2 — HAVE KEY INFORMATION AND INDIVIDUAL INFORMATION ENTERED ? — NO

YES

C3 — READ INDIVIDUAL INFORMATION FROM USER'S FACE IMAGE INFORMATION

C4 — COMPARE AND CHECK BOTH OF PIECES OF INDIVIDUAL INFORMATION

C5 — DISPLAY CHECKED RESULT

END

EP 1 447 751 A1

102    LOCAL-SIDE INFORMATION PROCESSING SYSTEM #1    REMOTE-SIDE INFORMATION PROCESSING SYSTEM #2

# F I G . 5

3 A

TO PROJECTOR

RGB SIGNAL OUTPUT

3 1
DISPLAY ADAPTER

3 2
CPU

3 3
WORK RAM

DO=D1+D2 , ID, UCD

DO=D1+D2 , ID, UCD

3 6

3 4
DATA STORAGE DEVICE (HDD, ROM, RAM)

NETWORK ADAPTER

3 5

DATA SIGNAL

DO, UCD, ID

TO NOTEBOOK PERSONAL COMPUTER PCi

# F I G. 6

USER CONFIRMATION DATA (45 BYTES)

USER INFORMATION (42 BYTES)

UCD

| HEADER ID (2 BYTES) | USER NAME (12 BYTES) | FULL NAME (20 BYTES) | USER ID (8 BYTES) | CHECKSUM (RGB) (3 BYTES) |
|---|---|---|---|---|

| 0xEC | RIGHT CODE [7:0] |
|---|---|

# F I G. 7

55

1

y

x

1                                         45

BITMAP IMAGE HAVING SIZE OF 45 PIXELS BY 55 PIXELS

Q

# F I G . 8

```
                    ┌─────────┐
                    │  START  │
                    └────┬────┘
                         │
                         ▼ ◄──────────────────┐
      E 1                                      │
           ╱─────────────────────╲    NO       │
          ╱   IS REGISTRATION      ╲───────────┘
          ╲   REQUEST RECEIVED      ╱
           ╲         ?             ╱
            ╲───────┬─────────────╱
      E 2           │ YES
           ┌────────▼──────────────┐      ┌──────────────────┐
           │ CREATE USER INFORMATION│◄────│ SPECIFY OPERATING │
           └────────┬──────────────┘      │      REIGHT       │
                    │                      └──────────────────┘
      E 3           ▼
           ┌───────────────────────┐      ┌──────────────────┐
           │ ENCRYPT USER INFORMATION│◄───│     USER KEY      │
           └────────┬──────────────┘      └──────────────────┘
                    │
      E 4           ▼
           ┌───────────────────────┐
           │  EMBED INTO IMAGE FILE │
           └────────┬──────────────┘
                    │
      E 5           ▼
           ┌───────────────────────┐
           │  CALCULATE CHECKSUMS   │
           └────────┬──────────────┘
                    │
      E 6           ▼
           ┌───────────────────────┐
           │ EMBED CHECKSUMS INTO   │
           │      IMAGE FILE        │
           └────────┬──────────────┘
                    │
      E 7           ▼
           ┌───────────────────────┐
           │      SPECIFY FILE      │
           └────────┬──────────────┘
                    │
      E 8           ▼
           ┌───────────────────────┐
           │    ISSUE USER ICON     │
           └────────┬──────────────┘
                    │
                    ▼
               ┌─────────┐
               │   END   │
               └─────────┘
```

24

# FIG. 9

# F I G. 1 0

Attendee

2 4

○○○
43. 2. 57. 193

P 2

CHAT

2 3

×××
192. 168. 0. 222
Remote

REMOTE    CLEAR

# FIG. 11

**P 1**

| USER PHOTO | [?][X] |

FILE POSITION (I): [📁 MyIcon]   ⇐ 🔼 📄 🎬▾   (45 × 55)   🔍   **P 1 1**

- 🎴 EMI_01.bmp
- 🎴 EMI_02.bmp
- 🎴 EMI_03.bmp
- 🎴 **EMI_04.bmp**

FILE NAME (N): [EMI_04.bmp]   [ OPEN (O) ]

FILE TYPE (T): [UserPhoto(EMI_*.bmp) ▼]   [ CANCEL ]

PC i

8

EP 1 447 751 A1

# F I G. 1 2

Setup

USER NAME

×××

USER PHOTO(45×55pixels)

BROWSE ————— K9

USER KEY

******************

OK ———— K10   CANCEL ———— K11

PCi

8

# FIG. 13

# F I G . 1 4 A

```
           ( START )
               │
               ▼           F 1
      ┌──────────────────┐
      │ ACTIVATE PROGRAM │
      └──────────────────┘
               │
               ▼           F 2
      ╱─────────────────────╲  NO        F 3
     ╱  IS IT SAME USER NAME  ╲───────┐  ┌──────────────────┐
     ╲   AS PREVIOUS ONE ?    ╱       └─▶│ ENTER USER NAME   │
      ╲─────────────────────╱           └──────────────────┘
               │                                │
              YES                               ▼       F 4
               │                  ┌──────────────────────────┐
               │                  │ DISPLAY LIST AND SELECT   │
               │                  └──────────────────────────┘
               │◀────────────────────────────┘
               ▼
      ┌────────────────────┐  F 5
      │ DISPLAY USER ICON  │
      └────────────────────┘
               │
               ▼
      ┌────────────────────┐  F 6
      │ ENTER USER KEY     │
      └────────────────────┘
               │
               ▼
             ( 1 )
```

# FIG. 14B

F7 — READ USER INFORMATION AND CHECK INFORMATION

F8 — IS CHECKED RESULT POSITIVE OR NEGATIVE ? — NG / OK

F9 — DECRYPT USER INFORMATION

F10 — IS CHECKED RESULT OF USER NAME POSITIVE OR NEGATIVE ? — NG / OK

F11 — IS CHECK HEADER CODE 0xEC ? — NG / OK

F12 — PERMIT TO "ATTEND" CONFERENCE ORDINARILY

F13 — IS IT FINISH ? — NO / YES

F14 — 0x00 ? — NO / YES

F15 — PERMIT TO "ATTEND" IN A LIMITED MANNER

F16 — IS IT FINISH ? — NO / YES

F17 — "REFUSE" FROM ATTENDING CONFERENCE

END

# INTERNATIONAL SEARCH REPORT

| | International application No. |
|---|---|
| | PCT/JP02/12193 |

| A. | CLASSIFICATION OF SUBJECT MATTER |
|---|---|
| | Int.Cl⁷ G06F15/00, G06F1/00, G06T1/00 |

According to International Patent Classification (IPC) or to both national classification and IPC

| B. | FIELDS SEARCHED |
|---|---|

Minimum documentation searched (classification system followed by classification symbols)
Int.Cl⁷ G06F15/00, G06F1/00, G06F13/00, G06T1/00

Documentation searched other than minimum documentation to the extent that such documents are included in the fields searched
Jitsuyo Shinan Koho       1922–1996   Jitsuyo Shinan Toroku Koho   1996–2003
Kokai Jitsuyo Shinan Koho   1971–2003   Toroku Jitsuyo Shinan Koho    1994–2003

Electronic data base consulted during the international search (name of data base and, where practicable, search terms used)

| C. | DOCUMENTS CONSIDERED TO BE RELEVANT | |
|---|---|---|
| Category* | Citation of document, with indication, where appropriate, of the relevant passages | Relevant to claim No. |
| Y | JP 5-257890 A  (Hitachi, Ltd., et al.), 08 October, 1993 (08.10.93), Par. Nos. [0011], [0012] (Family: none) | 1-10 |
| Y | JP 2001-188740 A  (Canon Inc.), 10 July, 2001 (10.07.01), Figs. 2, 3 (Family: none) | 1-10 |
| Y | JP 2001-256137 A  (Nippon Telegraph and Telephone West Corp.), 21 September, 2001 (21.09.01), (Family: none) | 1-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 February, 2003 (20.02.03) | 04 March, 2003 (04.03.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
| --- |
| PCT/JP02/12193 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2001-222510 A (Horonetto Kabushiki Kaisha), 17 August, 2001 (17.08.01), Par. Nos. [0006], [0007] (Family: none) | 2,4 |
| Y | JP 2001-86319 A (Toshiba Corp.), 30 March, 2001 (30.03.01), (Family: none) | 2,4 |
| Y | JP 2001-312474 A (Sony Corp.), 09 November, 2001 (09.11.01), Par. Nos. [0102], [0104] (Family: none) | 3 |
| Y | JP 2000-67002 A (Mitsutoyo Corp.), 03 March, 2000 (03.03.00), Par. No. [0010] (Family: none) | 3 |
| Y | JP 2001-197090 A (Sony Corp.), 19 July, 2001 (19.07.01), Par. No. [0048] (Family: none) | 5,6 |
| Y | JP 2001-34580 A (Nippon Telegraph And Telephone Corp.), 09 February, 2001 (09.02.01), (Family: none) | 7 |
| A | Jun'ichi REKIMOTO, "Gakkai deno Chat !? WISS' 97 deno Jikken", bit, 01 June, 1998 (01.06.98), Vol.31, No.6, pages 9 to 17, ISSN 0385 to 6984 | 1-10 |
| A | JP 2001-245269 A (Sony Corp.), 07 September, 2001 (07.09.01), Fig. 6; Par. Nos. [0125] to [0128] (Family: none) | 1-10 |
| A | JP 7-325776 A (Hitachi, Ltd.), 12 December, 1995 (12.12.95), (Family: none) | 1-10 |
| A | JP 2000-90052 A (Toshiba Corp.), 31 March, 2000 (31.03.00), Par. No. [0015] (Family: none) | 3 |
| A | JP 2001-188708 A (Toppan Forms Co., Ltd.), 10 July, 2001 (10.07.01), (Family: none) | 5,6 |

Form PCT/ISA/210 (continuation of second sheet) (July 1998)